# EUROPEAN PATENT APPLICATION

(11) **EP 1 821 558 A1**
(43) Date of publication of application: **22.08.2007**
(21) Application number: 05807034.3
(22) Date of filing: 16.11.2005
(51) Int. Cl.: H04Q 7/38

(54) **MAXIMUM ALLOWABLE TRANSMISSION RATE DECIDING METHOD, MOBILE STATION AND WIRELESS BASE STATION**

(30) Priority: 17.11.2004 JP 2004333689; 05.01.2005 JP 2005001028
(71) Applicant: NTT DoCoMo INC., Chiyoda-ku Tokyo 100-6150 (JP)
(72) Inventor: USUDA, Masafumi, NTT DoCoMo,Inc., Chiyoda-ku, Tokyo 100-6150 (JP); UMESH, Anil, NTT DoCoMo,Inc., Chiyoda-ku, Tokyo 100-6150 (JP); NAKAMURA, Takehiro, NTT DoCoMo,Inc., Chiyoda-ku, Tokyo 100-6150 (JP)
(74) Representative: HOFFMANN EITLE
(86) International application number: PCT/JP2005/021031
(87) International publication number: WO 2006/054594

(57) **Abstract**

The present invention relates to a maximum allowable transmission rate determination method for determining a maximum allowable transmission rate which a mobile station establishing radio links with a first cell and a second cell can use. The maximum allowable transmission rate determination method according to the present invention includes notifying, at the first cell, first control information for controlling the maximum allowable transmission rate of the mobile station, to the mobile station; measuring, at the second cell, an interference power from another cell; calculating, at the second cell, second control information for controlling the maximum allowable transmission rate of the mobile station based on the measured interference power, to notify the second control information to the mobile station; and determining, at the mobile station, the maximum allowable transmission rate of the mobile station, by multiplying the first control information by the second control information.

## Description

### [Technical Field]

The present invention relates to a maximum allowable transmission rate determination method usable for a mobile station establishing radio links with a first cell and a second cell, and relates to a mobile station and radio base station that are used in the above-mentioned maximum allowable transmission ratio determination method.

In particular, the present invention relates to a maximum allowable transmission rate determination method, a mobile station, and a radio base station that are adaptable to the "W-CDMA" system and the "CDMA 2000" system of the third generation mobile communication systems.

### [Background Art]

In a conventional mobile communication system, as for an uplink from a mobile station UE to a radio base station Node B, a radio network controller RNC is configured to determine a transmission rate of a dedicated channel, in consideration of radio resources of the radio base station Node B, an interference volume in the uplink, a transmission power of the mobile station UE, a transmission processing performance of the mobile station UE, a transmission rate required for a host application and the like; and to notify the mobile station UE and the radio base station Node B of the determined transmission rate of the dedicated channel by a message of a layer 3 (Radio Resource Control Layer).

Here, the radio network controller RNC is an apparatus located in an upper level of a radio base station Node B, and configured to control a radio base station Node B and a mobile station UE.

In general, data communications often cause burst traffic compared to voice communications or television communications. For this reason, it is desirable that the transmission rate of a channel used for data communications be changed at high speed.

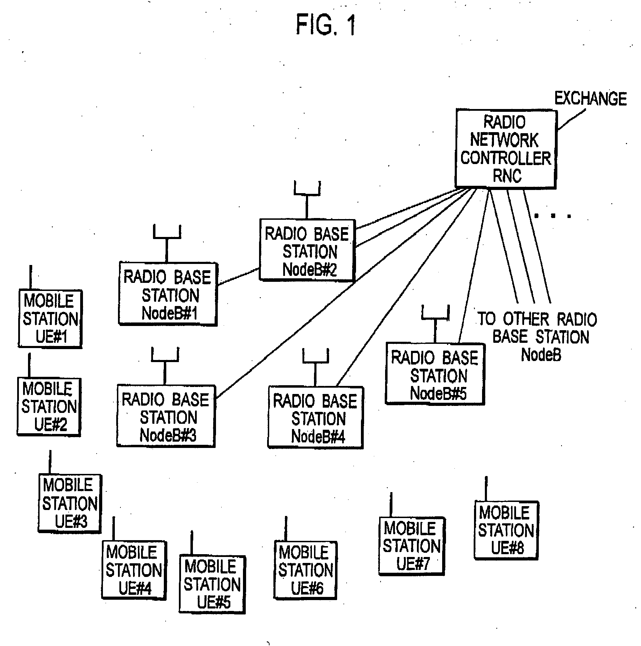

However, as shown in Fig. 1, the radio network controller RNC integrally controls a plurality of radio base stations Node B. Accordingly, there is a problem that the conventional mobile communication system has difficulty in performing a control for changing a transmission rate of a channel at high speed (for example, approximately 1 to 100 ms), due to processing load, processing delay, or the like.

In the conventional radio network controller RNC, there is also a problem that costs for implementing an apparatus and operating a network are substantially increased even if the control for changing a transmission rate of a channel at high speed can be performed.

Accordingly, in the conventional mobile communication system, a transmission rate of a channel is usually controlled and changed on the order of a few hundred ms to a few seconds.

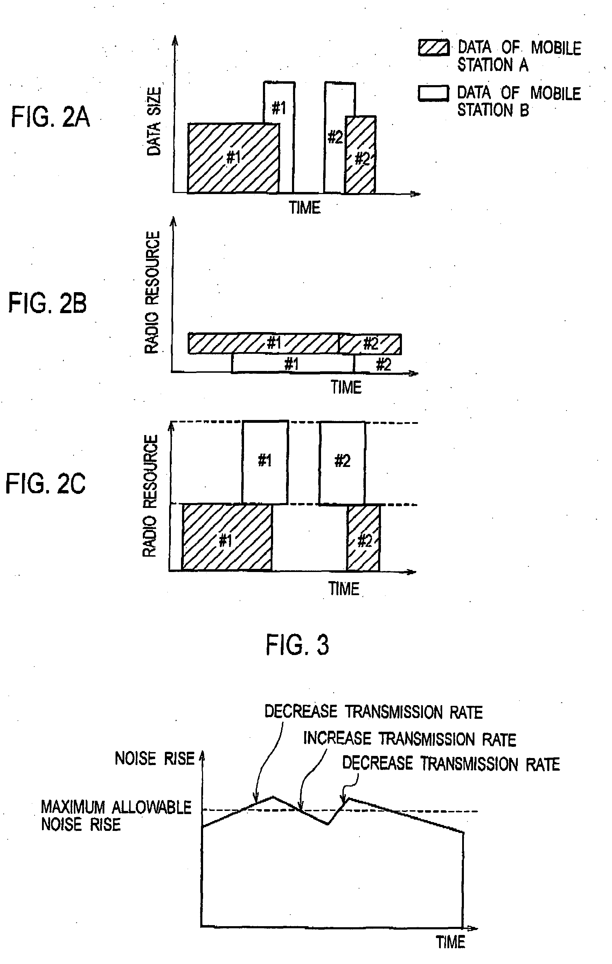

Consequently, in the conventional mobile communication system, when burst data transmissions are performed as shown in Fig. 2A, the data are to be transmitted by permitting low speed, high delay, and low-transmission efficiency as shown in Fig. 2B, or, as shown in Fig. 2C, by reserving radio resources for high speed communications and by permitting the wasting of radio band resources in an available time and hardware resources in the radio base station Node B.

Note that it is assumed that the radio resources in the vertical axis in Fig. 2 includes both of the above-described radio band resources and hardware resources.

Then, the "3GPP" and the "3GPP2", which are international standardization groups of the third generation mobile communication system, have discussed a method for controlling high-speed radio resources at a layer 1, and a media access control (MAC) sub-layer (a second layer) between a radio base station Node B and a mobile station UE, so as to utilize the radio resources effectively. Such discussions or discussed functions will be hereinafter collectively referred to as the "Enhanced Uplink (EUL)".

In the Enhanced Uplink, the radio base station Node B controls, in the lower layers (layer 1 and layer 2), the transmission rate of a channel used for communications in the uplink at high speed, so that throughputs of cells can be improved.

Specifically, as shown in Fig. 3, the radio base station Node B is configured to measure a noise rise of a channel used for communications in an uplink, and to consecutively control the transmission rate of a channel so as to converge the noise rise of the channel into a level closer to that of the maximum allowable noise rise.

Here, the noise rise is a ratio between an interference power in a predetermined channel in a predetermined frequency and a noise power (a thermal noise power or a noise power from the outside of the mobile communication system) in the predetermined frequency. In other words, the noise rise is an offset that a receiving level in a communication state has relative to a receiving level (noise floor) in a non-communication state.

In the uplink communications in the conventional mobile communication system (particularly, a mobile communication system employing the CDMA system), a call admission control processing is performed by using a noise rise in addition to hardware resources of a radio base station Node B.

On the other hand, in the downlink communications in the conventional mobile communication system, a call admission control processing is performed by using a total transmission power of the radio base station Node B in addition to the hardware resources of the radio base station Node B.

Specifically, in the uplink communications in the conventional mobile communication system, a call admission control processing is performed by a noise rise when hardware resources of a radio base station Node B have sufficient capacity compared to that of a radio band resource (that is, a determination is made as to whether or not a new channel is to be set).

In addition, in the enhanced uplink, for each mobile station UE, a cell is defined in which a scheduling processing and a transmission rate control processing are mainly carried out. The above-mentioned cell is called as a serving cell of a mobile station UE. For example, a serving cell is configured to designate a maximum allowable transmission rate, to a mobile station UE belonging to the serving cell.

In contrast, it is also possible to configure a cell, which is not a serving cell, but which is connected to a mobile station UE by a soft handover processing (that is, a non-serving cell) to designate the mobile station UE of the maximum allowable transmission rate. However, the non-serving cell cannot designate a mobile station UE of a maximum allowable transmission rate higher than that of the maximum allowable transmission rate designated by the serving cell. Accordingly, for example, the non-serving cell is configured to transmit a "Down command" only in a case where it is desired that the maximum allowable transmission rate designated by a serving cell be lowered, and configured never to send anything in other cases.
[Non-patent Document 11 "W-CDMA Mobile Communication System", published by Keiji Tachikawa, Jon Wiley & Son.

However, in the mobile communication system to which the conventional Enhanced Uplink is applied, as described above, a mobile station UE performing a soft handover processing with cells within a plurality of radio base stations Nodes B is configured to perform the transmission rate control processing in the uplink, based on the "DOWN command" transmitted from the non-serving cell in addition to a maximum allowable transmission rate (or a parameter for calculating the maximum allowable transmission rate) designated by a serving cell.

Accordingly, there is a problem that when the above-mentioned mobile station UE communicates with a non-serving cell for a long time, the "Down commands" are accumulated, resulting in an extreme decrease in the transmission rate in the uplink of the mobile station UE.

### [Disclosure of the Invention]

The present invention has been made in view of the forgoing problems and aims to provide a maximum allowable transmission rate determination method in which an extreme decrease of the transmission rate in an uplink of a mobile station can be suppressed even when a soft handover processing between a serving cell and a non-serving cell is performed for a long time, and relates to a mobile station and radio base station that are used in the above-mentioned maximum allowable transmission ratio determination method.

A first aspect of the present invention is summarized as a maximum allowable transmission rate determination method for determining a maximum allowable transmission rate which a mobile station establishing radio links with a first cell and a second cell can use, including steps of: notifying, at the first cell, first control information for controlling the maximum allowable transmission rate of the mobile station, to the mobile station; measuring, at the second cell, an interference power from another cell; calculating, at the second cell, second control information for controlling the maximum allowable transmission rate of the mobile station based on the measured interference power, to notify the second control information to the mobile station; and determining, at the mobile station, the maximum allowable transmission rate of the mobile station, by multiplying the first control information by the second control information.

In the first aspect of the present invention, a first cell set can transmit the first control information to the mobile station, the fist cell set including the first cell and another cell provided in a same radio base station as a radio base station in which the first cell is provided; and the second cell can calculate the second control information based on the interference power, to transmit the calculated second control information to the mobile station.

In the first aspect of the present invention, the first control information can be information for indicating the maximum allowable transmission rate of the mobile station; the second control information can be a maximum allowable transmission rate coefficient to be multiplied to the maximum allowable transmission rate of the mobile station which is indicated by the first control information; the second cell can notify the second control information to the mobile station, by transmitting the mobile station a signaling pattern corresponding to the maximum allowable transmission rate coefficient; and the signaling pattern and the maximum allowable transmission rate coefficient can be corresponded, so that a Hamming distance or an Euclidean distance between the signaling patterns becomes smaller, as a difference between the maximum allowable transmission rate coefficients becomes smaller.

In the first aspect of the present invention, the first control information can be information for indicating the maximum allowable transmission rate of the mobile station; the second control information can be a maximum allowable transmission rate coefficient to be multiplied to the maximum allowable transmission rate of the mobile station which is indicated by the first control information; and the second cell can notify the mobile station of the maximum allowable transmission rate coefficient by the number of "1" or "0" in a plurality of bits to be transmitted during a predetermined period.

A second aspect of the present invention is summarized as a mobile station establishing radio links with a first cell and a second cell, including: a first control information receiving unit configured to receive, from the first cell, first control information for controlling the maximum allowable transmission rate of the mobile station; a second control information receiving unit configured to receive, from the second cell, second control information for controlling the maximum allowable transmission rate of the mobile station; and a maximum allowable transmission rate determining unit configured to determine the maximum allowable transmission rate of the mobile station, by multiplying the first control information by the second control information.

In the second aspect of the present invention, the first control information receiving unit can be configured to receive the first control information, from a fist cell set including the first cell and another cell provided in a same radio base station as a radio base station in which the first cell is provided.

In the second aspect of the present invention, the first control information can be information for indicating the maximum allowable transmission rate of the mobile station; the second control information can be a maximum allowable transmission rate of the mobile station which is indicated by the first control information; the second control information receiving unit can be configured to receive the maximum allowable transmission rate coefficient corresponding to a signaling pattern received from the second cell; and the signaling pattern and the maximum allowable transmission rate coefficient can be corresponded, so that a Hamming distance or an Euclidean distance between the signaling patterns becomes smaller, as a difference between the maximum allowable transmission rate coefficients becomes smaller.

In the second aspect of the present invention, the first control information can be information for indicating the maximum allowable transmission rate of the mobile station; the second control information can be a maximum allowable transmission rate coefficient to be multiplied to the maximum allowable transmission rate of the mobile station which is indicated by the first control information; and the second control information receiving unit can be configured to determine a maximum allowable transmission rate coefficient corresponding to the number of "1" or "0" in a plurality of bits to be transmitted during a predetermined period, as the maximum allowable transmission rate coefficient.

A third aspect of the present invention is summarized as a radio base station, which includes a second cell, used in a maximum allowable transmission rate determination method for determining a maximum allowable transmission rate which a mobile station establishing radio links with a first cell and the second cell can use, including: an interference power measuring unit configured to measure an interference power from a cell other than the second cell; and a second control information notifying unit configured to calculate second control information for controlling the maximum allowable transmission rate of the mobile station based on the measured interference power, to notify the second control information to the mobile station.

In the third aspect of the present invention, the second control information can be a maximum allowable transmission rate coefficient to be multiplied to the maximum allowable transmission rate of the mobile station which is indicated by the first control information; the second control information notifying unit can be configured to notify the second control information to the mobile station, by transmitting the mobile station a signaling pattern corresponding to the maximum allowable transmission rate coefficient; and the signaling pattern and the maximum allowable transmission rate coefficient can be corresponded, so that a Hamming distance or an Euclidean distance between the signaling patterns becomes smaller, as a difference between the maximum allowable transmission rate coefficients becomes smaller.

In the third aspect of the present invention, the second control information can be a maximum allowable transmission rate coefficient to be multiplied to the maximum allowable transmission rate of the mobile station which is indicated by the first control information; and the number of "1" or "0" in a plurality of bits to be transmitted during a predetermined period can be corresponded to the maximum allowable transmission rate coefficient.

### [Brief Description of the Drawings]

[Fig. 1] Fig. 1 is an entire configuration diagram of a general mobile communication system.
[Fig. 2] Fig. 2 is a diagram for illustrating operations when burst data is transmitted in the conventional mobile communication system.
[Fig. 3] Fig. 3 is a diagram for illustrating operations when a transmission rate in an uplink is controlled in the conventional mobile communication system.
[Fig. 4] Fig. 4 is a diagram showing a topology of channels in a mobile communication system according to an embodiment of the present invention.
[Fig. 5] Fig. 5 is a functional block diagram of a radio base station (a configuration for a non-serving cell) of the mobile communication system according to an embodiment of the present invention.
[Fig. 6] Fig. 6 is a table showing an example of a corresponding table of signaling patterns and ratios of allowable transmission rate controlled by the mobile base station (the configuration for non-serving cell) and mobile station of the mobile communication system according to an embodiment of the present invention.
[Fig. 7] Fig. 7 is a functional diagram of the mobile station in the mobile communication system according to an embodiment of the present invention.
[Fig. 8] Fig. 8 is a sequential diagram showing operations of the mobile communication system according to an embodiment of the present invention.
[Fig. 9] Fig. 9 is a diagram showing a topology of channels in a mobile communication system according to a modified example of the present invention.
[Fig. 10] Fig. 10 is a diagram for illustrating a mobile communication system according to a modified example 2 of the present invention.

### [Best Mode for Carrying out the Invention]

### (Mobile communication system according to first embodiment of the present invention)

By referring to FIGS. 1 and 4 to 8, a description will be given of a mobile communication system according to a first embodiment of the present invention. As shown in Fig. 1, the mobile communication system according to the present embodiment is provided with a plurality of mobile stations UE #1 to #8, a plurality of radio base stations Node B #1 to #5, and a radio network controller RNC.

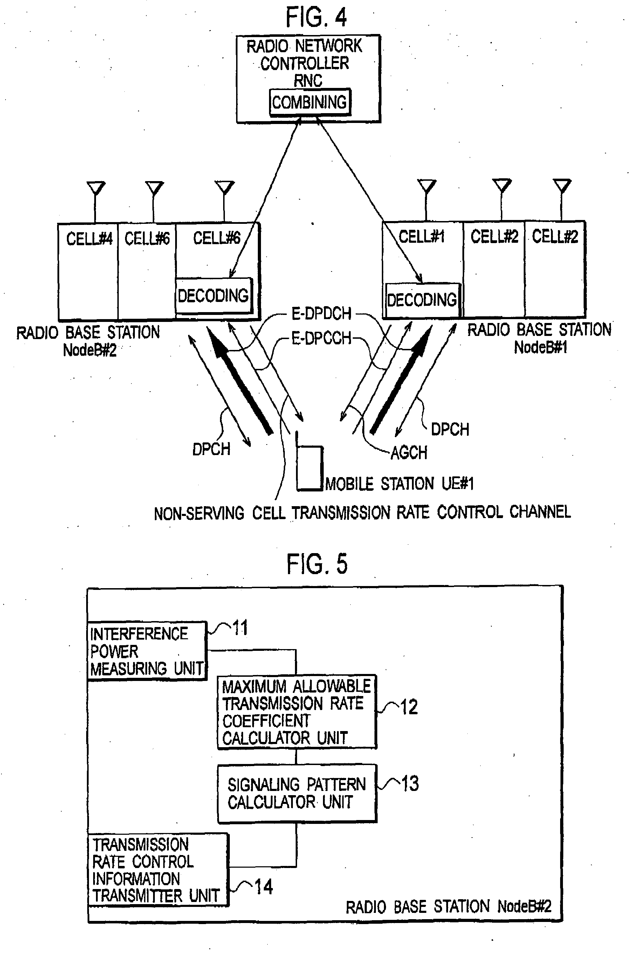

For simplicity, a configuration of the mobile communication system according to the first embodiment of the present invention will be described by using an example in which a mobile station UE #1 performs a soft handover processing with a cell #1 (a first cell) belonging to the radio base station Node B #1 and a cell #6 (a second cell) belonging to the radio base station Node B #2 as shown in Fig. 4. More specifically, in the present embodiment, it is assumed that a radio link with the cell #1 (the first cell) and the cell #6 (the second cell) is established in the mobile station UE #1.

Here, it is assumed that the cell #1 is a serving cell of the Enhanced Uplink, and the cell #6 is a non-serving cell.

In the mobile communication system according to the present embodiment, the mobile station UE #1 is configured to transmit a dedicated physical channel (DPCH), an enhanced dedicated physical data channel (E-DPDCH), and an enhanced dedicated physical control channel (E-DPCCH), to the cell #1 (serving cell), in the uplink.

It is to be noted that the enhanced dedicated physical channel (E-DPCH) is configured by the enhanced dedicated physical data channel (E-DPDCH) and enhanced dedicated physical control channel (E-DPCCH).

In addition, in the uplink, the mobile station UE #1 is configured to transmit the dedicated physical channel (DPCH), the enhanced dedicated physical data channel (E-DPDCH), and the enhanced dedicated physical control channel (E-DPCCH), to the cell #6 (the non-serving cell).

On the other hand, in a downlink, the cell #1 is configured to transmit an absolute grant channel (AGCH) and a dedicated physical channel (DPCH), to the mobile station UE #1. In addition, in the downlink, the cell #6 is configured to transmit a non-serving cell transmission rate control channel and a dedicated physical channel (DPCH), to the mobile station UE #1.

As shown in Fig. 5, as a configuration for the cell #6, the radio base station Node B #2 according to the present embodiment includes an interference power measuring unit 11, a maximum allowable transmission rate coefficient calculator unit 12, a signaling pattern calculator unit 13, and a transmission rate control information transmitter unit 14.

The interference power measuring unit 11 is configured to measure an interference power from cells other than the cell #6 (the second cell). Specifically, the interference power measuring unit 11 is configured to measure a reception power of signals from the mobile stations (for example, the mobile stations UE #1 to #8), which do not use the cell #6 as a serving cell, as the interference power from the cells other than the cell #6.

The maximum allowable transmission rate coefficient calculator unit 12 is configured to calculate a maximum allowable transmission rate coefficient (second control information for controlling the maximum allowable transmission rate of the mobile station UE #1), based on the interference power measured by the interference power measuring unit 11.

The maximum allowable transmission rate coefficient is a coefficient to be multiplied to the maximum allowable transmission rate of the mobile station UE #1 which is notified by the cell #1 (the first cell) being the serving cell. In other words, the maximum allowable transmission rate coefficient is used for controlling the maximum allowable transmission rate of the mobile state UE #1 which is notified by the cell #1 being the serving cell. For example, the maximum allowable transmission rate coefficient is configured to take a value in a range from 0% to 100%.

The signaling pattern calculator unit 13 is configured to calculate a signaling pattern, based on the maximum allowable transmission rate coefficient calculated by the maximum allowable transmission rate calculator unit 12.

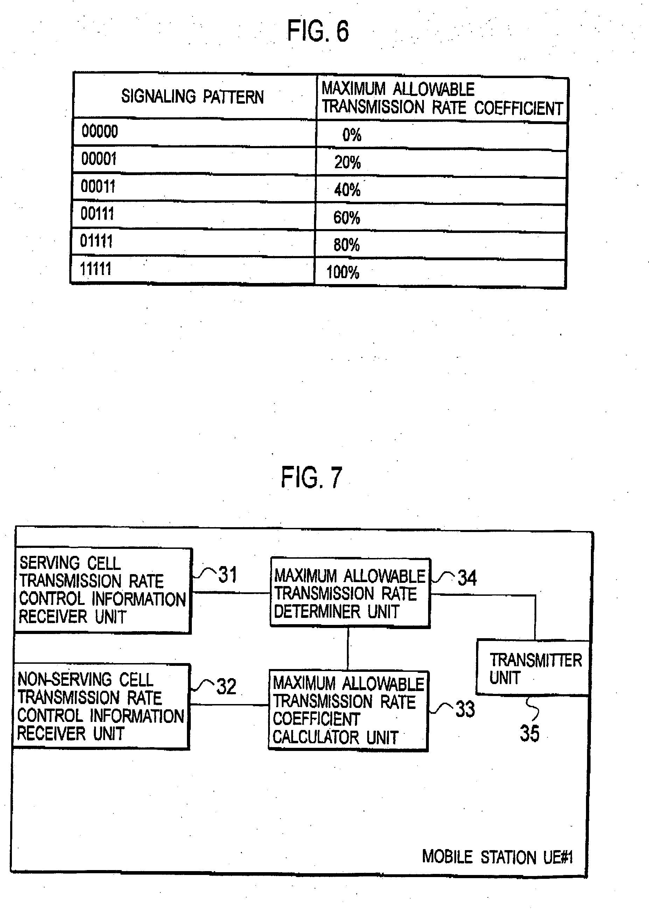

For example, the signaling pattern calculator unit 13 is configured to calculate a signaling pattern by using a corresponding table (a mapping table) of signaling patterns and maximum allowable transmission rate coefficients as shown in Fig. 6.

In the above-mentioned corresponding table, the signaling patterns and the maximum allowable transmission rate coefficients are corresponded in such an order that when the difference value between the maximum allowable transmission rate coefficients are smaller, the Hamming distance or a Euclidean distance between the signaling patterns become smaller.

For example, in the corresponding table shown in Fig. 6, a difference (20%) between "the maximum allowable transmission rate coefficient = 0%" and "the maximum allowable transmission rate coefficient = 20%" is smaller than a difference (40%) between "the maximum allowable transmission rate coefficient = 0%" and "the maximum allowable transmission rate coefficient = 40%". Accordingly, the Hamming distance or the Euclidean distance between "signaling pattern = 00000" and "signaling pattern = 00001" is closer than the Hamming distance or the Euclidean distance between "signaling pattern = 00000" and "signaling pattern = 00011".

The transmission rate control information transmitter unit 14 is configured to transmit, to the mobile station UE #1, a signaling pattern (non-serving cell transmission rate control information) calculated by the signaling pattern calculator unit 13 by using the non-serving cell transmission rate control channel.

Specifically, the transmission rate control information transmitter unit 14 is configured to spread the signaling pattern calculated by the signaling pattern calculator unit 13, by a predetermined channelization code, and to transmit it with a "BPSK", for example, for every 2ms. The above-mentioned channelization code may be one common to the cell #6 or one unique to the mobile station.

In addition, the transmission rate control information transmitter unit 14 may also transmit the non-serving cell transmission rate control information, by using the non-serving cell transmission rate control channel, to the mobile station UE in which the cell #6 other than the mobile station UE #1 is used as the non-serving cell.

As shown in Fig. 7, the mobile station UE #1 according to the present embodiment includes a serving cell transmission rate control information receiver unit 31, a non-serving cell transmission rate control information receiver unit 32, a maximum allowable transmission rate coefficient calculator unit 33, a maximum allowable transmission rate determiner unit 34, and a transmitter unit 35.

The serving cell transmission rate control information receiver unit 31 is configured to receive, from the cell #1 being a serving cell, through the absolute grant channel (AGCH), serving cell transmission rate control information (first control information, information instructing the maximum allowable transmission rate of the mobile station UE #1) for controlling the maximum allowable transmission rate of the mobile station UE #1.

The non-serving cell transmission rate control information receiver unit 32 is configured to receive, from the cell #6 being a non-serving cell, through a non-serving cell transmission rate control channel, non-serving cell transmission rate control information including the above-described signaling patterns.

The maximum allowable transmission rate coefficient calculator unit 33 is configured to abstract, from the signaling patterns despread and decoded by the non-serving cell transmission rate control information receiver unit 32, the signaling pattern which is the closest in terms of the Hamming distance or the Euclidean distance, by using the corresponding table as shown in FIG. 6. The maximum allowable transmission rate coefficient calculator unit 33 is configured to calculate a maximum allowable transmission rate coefficient (second control information for controlling the maximum allowable transmission rate of the mobile station UE #1) corresponding to the abstracted signaling pattern.

The maximum allowable transmission rate determiner unit 34 is configured to determine a maximum allowable transmission rate of the mobile station UE #1, by multiplying the maximum allowable transmission rate included in the serving cell transmission rate control information received by the serving cell transmission rate control information receiver unit 31 (or the maximum allowable transmission rate calculated by parameters included in the serving cell transmission rate control information) and the maximum allowable transmission rate coefficient (the second control information) calculated by the maximum allowable transmission rate coefficient calculator unit 33.

The transmitter unit 35 is configured to set the maximum allowable transmission rate of the mobile station UE #1 determined by the maximum allowable transmission rate determiner unit 34, as a maximum allowable transmission rate of the mobile station UE #1 at the next transmission timing.

For example, the transmitter unit 35 determines a transmission rate of the E-DPCH at the next transmission timing, in consideration of the maximum allowable transmission rate of the mobile station UE #1 determined by the maximum allowable transmission rate determiner unit 34 and the radio resources of the mobile station UE #1.

Note that in the present embodiment, as shown in FIG. 6, a signaling pattern from the cell #6 being a non-serving cell is composed of "5-bits". Accordingly, in a case where one bit is transmitted for every 2ms, it is assumed that the maximum allowable transmission rate coefficient is updated once for every 10ms.

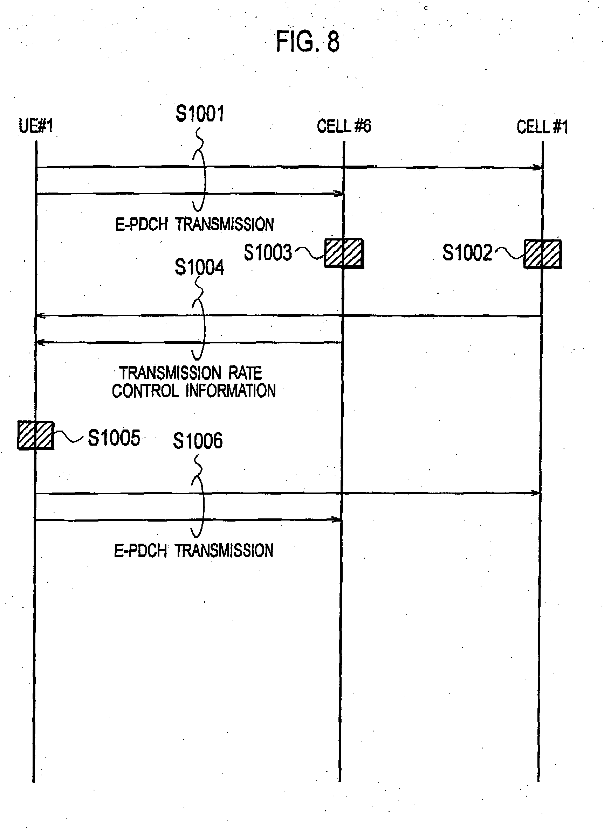

By referring to Fig. 8, the description will be given of the operations in which the maximum allowable transmission rate of the mobile station UE #1 in the mobile communication system according to the present embodiment are controlled.

At step S1001, the mobile station UE #1 transmits the E-DPCH at first transmission timing to the cell #1 being a serving cell and the cell #6 being a non-serving cell at a predetermined transmission rate.

At step S1002, the cell #1 determines a maximum allowable transmission rate of the mobile station UE #1 at second transmission timing by a predetermined transmission rate control method (for example, the transmission rate control method shown in Fig. 3).

On the other hand, at step S1003, the cell #6 measures a reception power of signals from the mobile station UE which does not use the cell #6 as a serving cell, and calculates the above-described maximum allowable transmission rate coefficient, based on the measurement result.

At step S1004, the cell #1 transmits, to the mobile station UE #1, the serving cell transmission rate control information including the determined maximum allowable transmission rate of the mobile station UE #1 (the first control information) by using the absolute grant channel (AGCH), while the cell #6 transmits, to the mobile station UE#1, the non-serving cell transmission rate control information including the signaling pattern corresponding to the calculated maximum allowable transmission rate coefficient (the second control information) by using the non-serving cell transmission rate control channel.

At step S1005, the mobile station UE #1 determines a maximum allowable transmission rate of the mobile station UE #1, by multiplying the maximum allowable transmission rate included in the serving cell transmission rate control information (or the maximum allowable transmission rate calculated by parameters included in the serving cell transmission rate control information), and the maximum allowable transmission coefficient corresponding to the signaling pattern included in the non-serving cell transmission rate control information.

At step S1006, at the second transmission timing, the E-DPCH is transmitted to the cell #1 and the cell #6 at the transmission rate determined in consideration of the maximum allowable transmission rate of the mobile station UE #1 determined at step S1005, the radio resources of the mobile station UE #1, and the like.

According to the mobile communication system of the first embodiment of the present invention, the control information transmitted from the cell #6 (the non-serving cell) is set not to the "Down command" but to the maximum allowable transmission rate coefficient to be multiplied by the maximum allowable transmission rate notified by the cell #1 (the serving cell). Consequently, the accumulation of the "Down command" in the mobile station UE #1 is prevented, and the extreme decrease of the transmission rate (the transmission rate of E-DPCH) in the uplink of the mobile station UE #1 can be suppressed.

Moreover, according to the mobile communication system of the first embodiment of the present invention, the signaling patterns and the maximum allowable transmission rate coefficients are corresponded in such an order that when the difference value between the maximum allowable transmission rate coefficients are smaller, the Hamming distance or the Euclidean distance between the signaling patterns become smaller. For this reason, even when a receiving error occurs, the adverse effect of such receiving error can be minimized.

### (Modified Example 1)

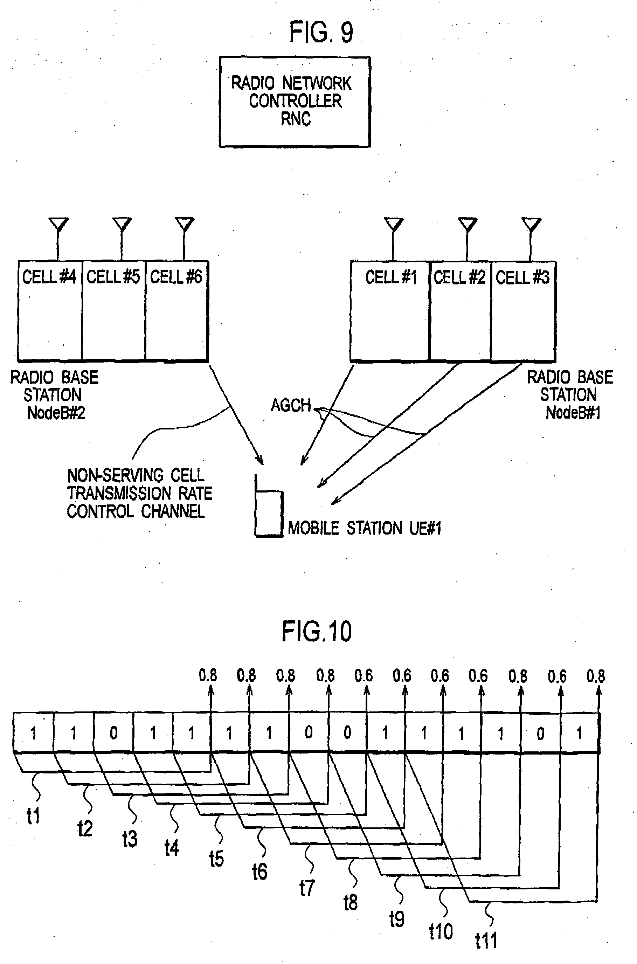

By referring to Fig. 9, a mobile communication system according to a modified example 1 of the present invention will be described. In the mobile communication system according to the present modified example 1 shown in Fig. 9, it is assumed that a cell #1 provided in a radio base station Node B #1 is a serving cell.

Note that in the mobile communication system according to the present modified example 1, cells (cells #2 and #3) belonging to the same radio base station Node B #1 as the serving cell (the cell #1) are set to "a serving cell set". In addition, cells belonging to a radio base station Node B #2 other than the radio base station Node B #1 are set to a "non-serving cell set".

Then, the cells included in the serving cell set are permitted to have a channel topology similar to the serving cell (the cell #1). More specifically, each of the cells #1 to #3 is configured to perform a scheduling processing and a transmission rate control processing.

In the mobile communication system according to the modified example 1 of the present invention, a first cell set (the serving cell set) including the first cell (for example, the cell #1) and the cells (for example, the cells 2 and 3) provided in the same radio base station Node B #1 as the first cell is configured to calculate the above-described serving cell transmission rate control information, and to transmit it to the mobile station UE #1, and second cells (for example cells #4 to #6) are configured to calculate the above-described non-serving cell transmission rate control information, and to transmit it to the mobile station UE #1.

In addition, the serving cell transmission rate control information receiver unit 31 of the mobile station UE #1 is configured to receive the serving cell transmission rate control information (the first control information) from the serving cell set (the first serving cell set) through the absolute grant channel (AGCH).

Moreover, the non-serving cell transmission rate control information receiver unit 32 of the mobile station UE #1 is configured to receive the non-serving cell transmission rate control information from the non-serving cell (the second cell) through the non-serving cell transmission rate control channel.

Furthermore, the maximum allowable transmission rate coefficient calculator unit 33 of the mobile station UE #1 is configured to calculate a maximum allowable transmission rate coefficient, based on the non-serving cell transmission rate control information received by the non-serving cell transmission rate control information receiver unit 32.

The maximum allowable transmission rate determiner unit 34 of the mobile station UE #1 is configured to determine a maximum allowable transmission rate of the mobile station UE #1, by multiplying the maximum allowable transmission rate included in the serving cell transmission rate control information received by the serving cell transmission rate control information receiver unit 31 (or the maximum allowable transmission rate calculated by parameters included in the serving cell transmission rate control information) and the maximum allowable transmission rate coefficient calculated by the maximum allowable transmission rate coefficient calculator unit 33.

Still furthermore, the transmitter unit 35 of the mobile station UE #1 is configured to set the maximum allowable transmission rate of the mobile station UE #1 determined by the maximum allowable transmission rate determiner unit 34, as a maximum allowable transmission rate of the mobile station UE #1 at the next transmission timing.

According to the mobile communication system of the present modified example, the inter-cell diversity can be performed within the radio base station Node B #1, so that the communication capacity in the uplink can be further increased.

Moreover, according to the mobile communication system of the modified embodiment, within the radio base station Node B #1, a soft combining can be performed on the data to be transmitted over the channel in the uplink, so that the deterioration of the enhanced dedicated physical channel (E-DPCH) is prevented.

### (Modified Example 2)

By referring to Fig. 10, a mobile communication system according to a modified example 2 of the present invention will be described.

The mobile communication system according the modified embodiment 2 has a configuration similar to that of the first embodiment except for a notification method of the maximum allowable transmission rate coefficient (the second control information). The mobile communication system according to the present modified example 2 will be described below by mainly focusing on differences with the mobile communication system according to the above-described fist embodiment.

In the mobile communication system according to the present modified example 2, a non-serving cell #6 (a second cell) is configured to notify the mobile station UE #1 of a maximum allowable transmission rate coefficient, by the number of "0" or "1" in a plurality of bits transmitted during a predetermined time period.

A signaling pattern calculator unit 13 of a radio base station Node B #2 according to the present modified example 2 is configured to associate the number of "0" or "1" in the plurality of bits transmitted during the predetermined time period with the maximum allowable transmission coefficient.

In the example of Fig. 10, the signaling pattern calculator unit 13 is configured to express the above-described maximum allowable transmission rate coefficient by the nearest 5 bits. Here, it is configured such that the multiplied result of the number of bits having a value of "1" in the nearest 5 bits and "1/5" corresponds to the above-described maximum allowable transmission rate coefficient.

More specifically, the signaling pattern calculator unit 13 is configured to set the number of values "1" in the nearest 5 bits to be '0' when the maximum allowable transmission rate coefficient '0' is to be notified; to set the number of values "1" in the nearest 5 bits to be '1' when the maximum allowable transmission rate coefficient '1/5 = 0.2' is to be notified; to set the number of values "1" in the nearest 5 bits to be '2' when the maximum allowable transmission rate coefficient '2/5 = 0.4' is to be notified; to set the number of values "1" in the nearest 5 bits to be '3' when the maximum allowable transmission rate coefficient '3/5 = 0.6' is to be notified; to set the numbers of values "1" in the nearest 5 bits to be '4' when the maximum allowable transmission rate coefficient '4/5 = 0.8' is notified; and to set the numbers of values "1" in the nearest 5 bits to be '5' when the maximum allowable transmission coefficient '5/5 = 1' is notified.

Specifically, the signaling pattern calculator unit 13 determines a bit value to be transmitted next so that the number of "1" in the plurality of bits transmitted during the predetermined time period would correspond to the above-described maximum allowable transmission rate coefficient.

For example, the signaling pattern calculator unit 13 determines a bit value to be transmitted next by referring to a transmission history so that the number of "1" in the nearest 5 bits would be '4', when the maximum allowable transmission rate coefficient '4/5 = 0.8' is to be notified.

It is to be noted that the transmission rate control information transmitter unit 14 may be configured to transmit, through the non-serving cell transmission rate control channel, non-serving cell transmission rate control information per every one bit, or may be configured to transmit non-serving cell transmission rate control information per every plurality of bits.

In addition, the maximum allowable transmission rate coefficient calculator unit 33 of the mobile station UE #1 according to the present modified example 2 is configured to determine a maximum allowable transmission rate coefficient corresponding to the number of "1" or "0" in the plurality of bits transmitted during the predetermined time period, as the maximum allowable transmission rate coefficient.

In the example of Fig. 10, the maximum allowable transmission rate coefficient calculator unit 33 judges that the above-described maximum allowable transmission rate coefficient is' 4/5 = 0.8', since the number of "1" in the nearest 5 bits is '4' at t1.

In addition, the maximum allowable transmission rate coefficient calculator unit 33 judges that the above-described transmission rate coefficient is '3/5 = 0.6' since the numbers of "1" in the nearest 5-bits are '3' at t5.

It is to be noted that in the present modified example 2, when one bit is to be transmitted for every 2ms, it is assumed that the maximum allowable transmission rate coefficient is updated every 2ms.

According to the mobile communication system of the present modified example 2, the mobile station obtains the numbers of "1" in the received nearest plurality of bits, so that the maximum allowable transmission rate coefficient can be calculated. Accordingly, the transmission rate control delay due to calculation delay of the maximum allowable transmission rate coefficient can be reduced.

### [Industrial Applicability]

As described above, according to the present invention, even when a soft handover processing is performed with a serving cell and a non-serving cell for a long time, it is possible to provide a maximum allowable transmission rate determination method capable of suppressing the extreme decrease of transmission rate in an uplink of a mobile station, a mobile station and radio base station that are used in such maximum allowable transmission rate determination method.

## Claims

1. A maximum allowable transmission rate determination method for determining a maximum allowable transmission rate which a mobile station establishing radio links with a first cell and a second cell can use, comprising steps of:
notifying, at the first cell, first control information for controlling the maximum allowable transmission rate of the mobile station, to the mobile station;
measuring, at the second cell, an interference power from another cell;
calculating, at the second cell, second control information for controlling the maximum allowable transmission rate of the mobile station based on the measured interference power, to notify the second control information to the mobile station; and
determining, at the mobile station, the maximum allowable transmission rate of the mobile station, by multiplying the first control information by the second control information.

2. The maximum allowable transmission rate determination method according to claim 1, wherein,
a first cell set transmits the first control information to the mobile station, the fist cell set including the first cell and another cell provided in a same radio base station as a radio base station in which the first cell is provided; and
the second cell calculates the second control information based on the interference power, to transmit the calculated second control information to the mobile station.

3. The maximum allowable transmission rate determination method according to claim 1 or 2, wherein,
the first control information is information for indicating the maximum allowable transmission rate of the mobile station;
the second control information is a maximum allowable transmission rate coefficient to be multiplied to the maximum allowable transmission rate of the mobile station which is indicated by the first control information;
the second cell notifies the second control information to the mobile station, by transmitting the mobile station a signaling pattern corresponding to the maximum allowable transmission rate coefficient; and
the signaling pattern and the maximum allowable transmission rate coefficient are corresponded, so that a Hamming distance or an Euclidean distance between the signaling patterns becomes smaller, as a difference between the maximum allowable transmission rate coefficients becomes smaller.

4. The maximum allowable transmission rate determination method according to claim 1 or 2, wherein,
the first control information is information for indicating the maximum allowable transmission rate of the mobile station;
the second control information is a maximum allowable transmission rate coefficient to be multiplied to the maximum allowable transmission rate of the mobile station which is indicated by the first control information; and
the second cell notifies the mobile station of the maximum allowable transmission rate coefficient by the number of "1" or "0" in a plurality of bits to be transmitted during a predetermined period.

5. A mobile station establishing radio links with a first cell and a second cell, comprising:
a first control information receiving unit configured to receive, from the first cell, first control information for controlling the maximum allowable transmission rate of the mobile station;
a second control information receiving unit configured to receive, from the second cell, second control information for controlling the maximum allowable transmission rate of the mobile station; and
a maximum allowable transmission rate determining unit configured to determine the maximum allowable transmission rate of the mobile station, by multiplying the first control information by the second control information.

6. The mobile station according to claim 5, wherein,
the first control information receiving unit is configured to receive the first control information, from a fist cell set including the first cell and another cell provided in a same radio base station as a radio base station in which the first cell is provided.

7. The mobile station according to claim 5 or 6, wherein,
the first control information is information for indicating the maximum allowable transmission rate of the mobile station;
the second control information is a maximum allowable transmission rate coefficient to be multiplied to the maximum allowable transmission rate of the mobile station which is indicated by the first control information;
the second control information receiving unit is configured to receive the maximum allowable transmission rate coefficient corresponding to a signaling pattern received from the second cell; and
the signaling pattern and the maximum allowable transmission rate coefficient are corresponded, so that a Hamming distance or an Euclidean distance between the signaling patterns becomes smaller, as a difference between the maximum allowable transmission rate coefficients becomes smaller.

8. The mobile station according to claim 5 or 6, wherein,
the first control information is information for indicating the maximum allowable transmission rate of the mobile station;
the second control information is a maximum allowable transmission rate coefficient to be multiplied to the maximum allowable transmission rate of the mobile station which is indicated by the first control information; and
the second control information receiving unit is configured to determine a maximum allowable transmission rate coefficient corresponding to the number of "1" or "0" in a plurality of bits to be transmitted during a predetermined period, as the maximum allowable transmission rate coefficient.

9. A radio base station, which comprises a second cell, used in a maximum allowable transmission rate determination method for determining a maximum allowable transmission rate which a mobile station establishing radio links with a first cell and the second cell can use, comprising:
an interference power measuring unit configured to measure an interference power from a cell other than the second cell; and
a second control information notifying unit configured to calculate second control information for controlling the maximum allowable transmission rate of the mobile station based on the measured interference power, to notify the second control information to the mobile station.

10. The radio base station according to claim 9, wherein,
the second control information is a maximum allowable transmission rate coefficient to be multiplied to the maximum allowable transmission rate of the mobile station which is indicated by the first control information;
the second control information notifying unit is configured to notify the second control information to the mobile station, by transmitting to the mobile station a signaling pattern corresponding to the maximum allowable transmission rate coefficient; and
the signaling pattern and the maximum allowable transmission rate coefficient are corresponded, so that a Hamming distance or an Euclidean distance between the signaling patterns becomes smaller, as a difference between the maximum allowable transmission rate coefficients becomes smaller.

11. The radio base station according to claim 9, wherein,
the second control information is a maximum allowable transmission rate coefficient to be multiplied to the maximum allowable transmission rate of the mobile station which is indicated by the first control information; and
the number of "1" or "0" in a plurality of bits to be transmitted during a predetermined period is corresponded to the maximum allowable transmission rate coefficient.
